# EUROPEAN PATENT APPLICATION

(11) **EP 3 845 889 A1**
(43) Date of publication of application: **07.07.2021**
(21) Application number: 19854997.4
(22) Date of filing: 12.06.2019
(51) Int. Cl.: G01N 21/88

(54) **INSPECTION DEVICE AND INSPECTION METHOD**

(30) Priority: 30.08.2018 JP 2018161683
(71) Applicant: Panasonic Intellectual Property Management Co., Ltd., Osaka-shi, Osaka 540-6207 (JP)
(72) Inventor: IMAGAWA, Taro, Osaka-shi, Osaka 540-6207 (JP); NODA, Akihiro, Osaka-shi, Osaka 540-6207 (JP); MARUYAMA, Yuki, Osaka-shi, Osaka 540-6207 (JP); KUSAKA, Hiroya, Osaka-shi, Osaka 540-6207 (JP)
(74) Representative: Vigand, Philippe
(86) International application number: PCT/JP2019/023209
(87) International publication number: WO 2020/044725

(57) **Abstract**

An inspection device (30) inspects fastening members (130) that fasten a structure (110). The inspection device (30) includes an obtainer (31) that obtains images including a first image (P1) and a second image (P2) of the fastening members (130) at times different from each other; a detector (32) that detects first displacements that are respective displacements of the fastening members (130) based on the first image (P1) and the second image (P2); and an identifier (33) that identifies, out of the fastening members (130) based on the first displacements, a target fastening member behaving differently from other fastening members (130).

## Description

### TECHNICAL FIELD

The present disclosure relates to an inspection device and an inspection method of inspecting a plurality of fastening members that fasten a structure.

### BACKGROUND ART

Bolt joints of an infrastructure structure such as a bridge have been checked, for example, through periodic visual or hammering inspections by workers. However, the structure includes a huge number of bolts and may be difficult to check depending on the locations of the bolts, which leads to a burden on the workers. To address the problem, Patent Literature (PTL) 1 discloses a bolt loosening inspection method of automatically inspecting loosening of bolts using a camera.

### Citation List

### Patent Literature

PTL 1: Japanese Unexamined Patent Application Publication No. H8-278116

### SUMMARY

### TECHNICAL PROBLEM

However, in the method according to PTL 1, loosening of each bolt is determined based on past and present measured data on the bolt. The past measured data is thus needed as a reference.

It is an objective of the present disclosure to provide an inspection device and an inspection method of simply inspecting a plurality of fastening members that fasten a structure.

### SOLUTIONS TO PROBLEM

An inspection device according to one aspect of the present disclosure is for inspecting a plurality of fastening members that fasten a structure. The inspection device includes: an obtainer that obtains a plurality of images including a first image and a second image of the plurality of fastening members captured at times different from each other; a detector that detects first displacements that are respective displacements of the plurality of fastening members based on the first image and the second image; and an identifier that identifies, out of the plurality of fastening members based on the first displacements, a target fastening member behaving differently from other fastening members.

An inspection method according to another aspect of the present disclosure uses an inspection device for inspecting a plurality of fastening members that fasten a structure. The inspection method includes: obtaining a plurality of images including a first image and a second image of the plurality of fastening members captured at times different from each other; detecting first displacements that are respective displacements of the plurality of fastening members based on the first image and the second image; and identifying, out of the plurality of fastening members based on the first displacements, a target fastening member behaving differently from other fastening members.

### ADVANTAGEOUS EFFECT

The inspection device and the inspection method according to the aspects of the present disclosure allow simple inspection of a plurality of fastening members that fasten a structure.

### BRIEF DESCRIPTION OF DRAWINGS

FIG. 1 shows a schematic configuration of an inspection system according to an embodiment.
FIG. 2 shows a functional configuration of an inspection device according to the embodiment.
FIG. 3 is a flowchart showing an operation of the inspection device according to the embodiment.
FIG. 4A shows an image captured by an imaging device while no load is applied to a structure.
FIG. 4B shows an image captured by the imaging device while a load is applied to the structure.
FIG. 5A shows time-series data on the displacements of bolts according to the embodiment.
FIG. 5B shows a difference of the displacement of a bolt according to the embodiment from a mean.
FIG. 6 is a table including bolt sizes stored in a storage according to the embodiment.
FIG. 7A is another example joint imaged by the imaging device.
FIG. 7B is further another example joint imaged by the imaging device.
FIG. 8A shows an image captured by the imaging device before movement of the entire structure.
FIG. 8B shows an image captured by the imaging device at the movement of the entire structure.

### DESCRIPTION OF EXEMPLARY EMBODIMENT

### Outline of Present Disclosure

An inspection device according to one aspect of the present disclosure is for inspecting a plurality of fastening members that fasten a structure. The inspection device includes: an obtainer that obtains a plurality of images including a first image and a second image of the plurality of fastening members captured at times different from each other; a detector that detects first displacements that are respective displacements of the plurality of fastening members based on the first image and the second image; and an identifier that identifies, out of the plurality of fastening members based on the first displacements, a target fastening member behaving differently from other fastening members.

With this configuration, the inspection device identifies a fastening member that may be defective, out of the plurality of fastening members based on a relative behavior. That is, the inspection device identifies the target fastening member as the fastening member that may be defective, even without any reference data obtained in advance. Accordingly, the inspection device identifies the target fastening member without clear criteria for determination, for example, a fastening member rotated at five degrees or more may be defective. As a result, the inspection device according to the aspect of the present disclosure simply inspects the plurality of fastening members that fasten the structure.

At least one of the first image and the second image may be captured while a load is applied to the structure.

This configuration significantly clarifies the difference in the displacement between a fastening member that may be defective and a fastening member that may not be defective. Accordingly, the inspection device performs more simple inspection.

The detector may further detect a second displacement that is a representative value of the respective displacements of the plurality of fastening members. The identifier may further identify the target fastening member based on the second displacement.

With this configuration, the identifier identifies the target fastening member based on the relation between the first and second displacements. Accordingly, the target fastening member is identified accurately.

The plurality of images may include three or more images including the first image and the second image. The detector may detect the first displacements and the second displacement at each of a plurality of times based on the plurality of images. The identifier may identify the target fastening member based on the first displacements and the second displacement detected at the plurality of times.

This configuration reduces errors of the identifier in identifying the target fastening member or the influence of noise. Accordingly, the target fastening member is identified accurately.

The plurality of fastening members may fasten the structure with a splice plate interposed therebetween. Each of the plurality of images may further include the splice plate. At displacement of the plurality of fastening members and the splice plate as a whole, the detector may correct the first displacements in accordance with the displacement of the splice plate.

This configuration allows identification of the target fastening member based on the displacements of the plurality of fastening members themselves, which further improves the identification accuracy.

The identifier may identify, as the target fastening member out of the plurality of fastening members, a fastening member having a first displacement different from the second displacement by a predetermined value or more.

This configuration allows identification of the target fastening member through a simple method such as comparison between a difference between the first and second displacements and the predetermined value.

The second displacement may be a mean or a median of the first displacements of the plurality of fastening members. The predetermined value may be determined based on a standard deviation of the first displacements of the plurality of fastening members.

This configuration facilitates the obtainment of the second displacement without any complicated calculation, which leads to reduction in the amount of processing by the detector.

The second displacement may be a mean or a median of the first displacements of the plurality of fastening members. The predetermined value may be determined based on a size of the plurality of fastening members.

With this configuration, the predetermined amount is determined based on the size of the fastening members. If the predetermined amount corresponds to a value indicating a movement distance, the movement distance is determined based on the size of the fastening members. Accordingly, the target fastening member can be identified at the predetermined amount corresponding to the size of the fastening members. As a result, the inspection device properly identifies the target fastening member in accordance with the size of the fastening members.

The mean or the median may be calculated by robust estimation.

With this configuration, the mean or the median is calculated based on the first displacements except for outliers, which facilitates the identification of the target fastening member.

The first displacements may include one of rotation angles or movement distances of the plurality of fastening members. The second displacement may include a representative value of the one of the rotation angles or the movement distances of the plurality of fastening members.

This configuration reduces the amount of processing by the detector and the identifier as compared to the case using both the rotation angles and the movement distances.

The first displacements may include rotation angles and movement distances of the plurality of fastening members. The second displacement may include representative values of the rotation angles and the movement distances of the plurality of fastening members. The identifier may further identify which of a rotation angle and a movement distance of the target fastening member is different from rotation angles or movement distances of other fastening members.

This configuration allows the identifier to identify, as the target fastening member, a bolt behaving differently from the other fastening members based on the rotation angles and the movement distances. In addition, the identifier identifies which of the rotation angle and the movement distance of the bolt is different from the other fastening members. This configuration allows an inspector to estimate the mode of abnormality based on the result. Accordingly, the target fastening member is identified more accurately than in the case using one of the rotation angles or the movement distances.

The plurality of images may constitute a video captured in a single imaging operation.

This configuration allows identification of the target fastening member based on the plurality of images captured in the single imaging operation.

The inspection device may further include an imager that captures the plurality of images.

With this configuration, the inspection device inspects the plurality of fastening members that fasten the structure even without obtaining images from an external device.

An inspection method according to one aspect of the present disclosure uses an inspection device for inspecting a plurality of fastening members that fasten a structure. The inspection method includes: obtaining a plurality of images including a first image and a second image of the plurality of fastening members captured at times different from each other; detecting first displacements that are respective displacements of the plurality of fastening members based on the first image and the second image; and identifying, out of the plurality of fastening members based on the first displacements, a target fastening member behaving differently from other fastening members.

Accordingly, the inspection method allows identification of a fastening member that may be defective, out of the plurality of fastening members based on the relative behavior. That is, the inspection method allows the identification of the target fastening member as the fastening member that may be defective, even without any reference data obtained in advance. Accordingly, the inspection method allows the identification of the target fastening member without clear criteria for determination, for example, a fastening member rotated at a predetermined angle or more may be defective. As a result, the inspection method according to the aspect of the present disclosure allows simple inspection of the plurality of fastening members that fasten the structure.

These general and specific aspects may be implemented using a system, a method, an integrated circuit, a computer program, or a non-transitory computer-readable recording medium such as a CD-ROM, or any combination of systems, methods, integrated circuits, computer programs, or recording media. The programs may be stored in advance in a storage medium or may be supplied to a storage medium via a wide area network such as the internet.

Now, an embodiment will be described in detail with reference to the drawings.

Note that the embodiment and the variation described below are mere comprehensive or specific examples. The numerical values, shapes, materials, constituent elements, the arrangement and connection of the constituent elements, steps, step orders, etc. shown in the following embodiment and variation are thus mere examples, and are not intended to limit the scope of the present disclosure. Among the constituent elements in the following embodiment, those not recited in any of the independent claims defining the broadest concept are described as optional constituent elements.

The figures are schematic representations and not necessarily drawn strictly to scale. In the figures, substantially the same constituent elements are assigned with the same reference marks, and redundant descriptions may be omitted or simplified.

In the specification, the terms representing the relations between parallel constituent elements, the terms such as "rectangle" representing the shapes of the constituent elements, and the numerical values do not have exact meanings only and include substantially equivalent ranges such as differences of several percentages.

An example will be described below where images are still images. Videos include a plurality of still images.

### EMBODIMENT

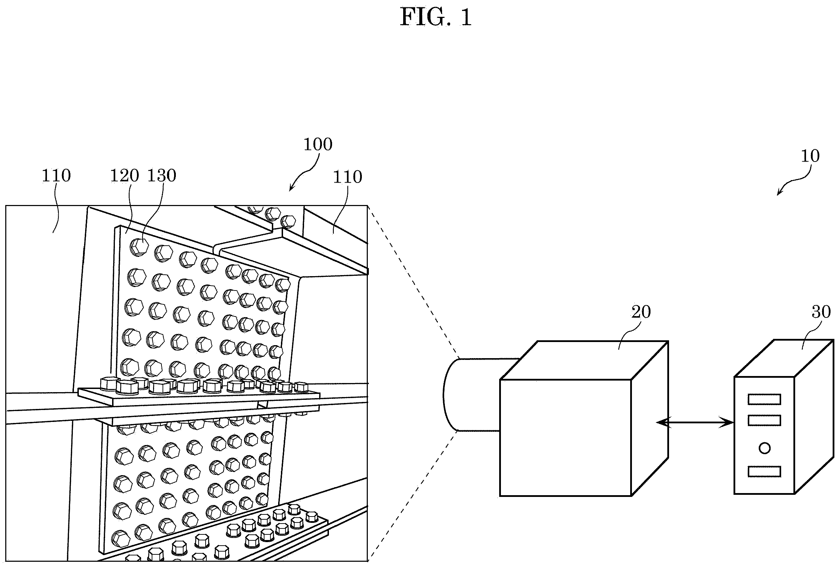

Now, an inspection device and other elements according to this embodiment will be described with reference to FIGS. 1 to 7B.

### 1. Configuration of Inspection System

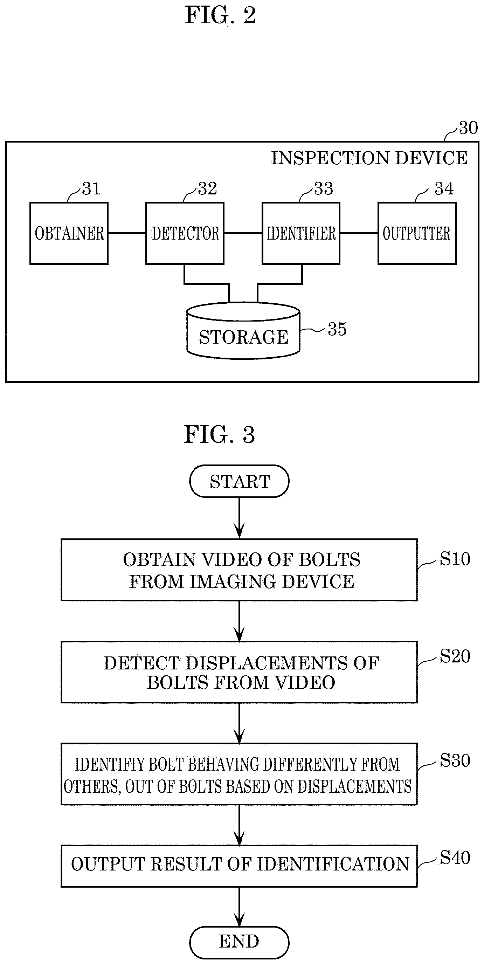

First, inspection system 10 including inspection device 30 according to this embodiment will be described with reference to FIGS. 1 and 2. FIG. 1 shows a schematic configuration of inspection system 10 according to this embodiment.

As shown in FIG. 1, inspection system 10 includes imaging device 20 and inspection device 30. An example will be described where inspection system 10 inspects displacements of a plurality of bolts (example fastening members) 130 for fastening structure 110 at a joint (e.g., a bolt joint) 100 of structure 110. In this embodiment, inspection device 30 is for inspecting loosening of bolts 130 that fasten structure 110. Note that the expression of "fastening structure 110" means fastening constituent elements of structure 110 together. FIG. 1 shows an example where a part of structure 110 at the near end (i.e., on the left on the paper) and a part of structure 110 at the far end (i.e., on the right on the paper) are fastened together.

Structure 110 may be an infrastructure structure such as a bridge. In addition, structure 110 may be a steel structure. This embodiment will be described where a road or a railway allowing travels of vehicles such as motor vehicles or trains passes through structure (e.g., bridge) 110. Note that displacements of bolts 130 include, for example, at least one of the rotation angles or movement distances of bolts 130. Note that the rotation angles include rotation directions and the angles rotated, whereas the movement distances include movement directions and the distances moved. In this specification, the movement distances denote not the distances moved actually but the values corresponding to the distances moved actually. Each movement distance is represented by, for example, the number of pixels corresponding to the distance moved actually within an image.

Structure 110 is fastened, for example, using the plurality of bolts 130 with single splice plate 120 interposed therebetween. The plurality of bolts 130 are arranged two-dimensionally and regularly on splice plate 120, for example. While splice plate 120 is a rectangle in FIG. 1, the shape is not limited thereto. Note that splice plate 120 may be omitted.

The fastening members that fasten structure 110 are not limited to bolts 130. Structure 110 are fastened using bolts 130 and nuts. The fastening members may thus be the nuts. As long as fastening structure 110, the fastening members may be, for example, rivets or other members. The fastening members fasten structure 110 and are required to be periodically inspected by inspectors, for example. All the plurality of bolts 130 are of the same type, for example.

Imaging device 20 is a digital video camera or a digital still camera including an image sensor, for example. Imaging device 20 images videos for inspecting loosening of the plurality of bolts 130 that fasten structure 110. Specifically, imaging device 20 images videos of the plurality of bolts 130.

Imaging device 20 simultaneously images three or more bolts 130 attached to single splice plate 120. In this embodiment, imaging device 20 simultaneously images all the plurality of bolts 130 attached to single splice plate 120. That is, all the plurality of bolts 130 are the subjects of imaging device 20. Imaging device 20 simultaneously images a plurality of bolts 130 placed under the same circumstances such as being attached to single splice plate 120. Imaging device 20 may perform the imaging, for example, at such an angle of view that the appearances of the plurality of bolts 130 and splice plate 120 are visible. In short, a plurality of images (i.e., a video) include the plurality of bolts 130 arranged on splice plate 120.

Imaging device 20 captures a video of bolts 130 including the period in which the load applied to structure 110 changes, for example. If structure 110 is a bridge, for example, imaging device 20 captures a video including the period in which a vehicle travels on the bridge.

The video includes the same part (i.e., joint 100) of structure 110. The video includes a plurality of images (i.e., a plurality of flames). Imaging device 20 simultaneously images all the plurality of bolts 130 of joint 100, for example.

One or more images including a vehicle may be captured by imaging device 20 while a load is applied to structure 110. That is, imaging device 20 may perform the imaging at an angle of view including joint 100 and a vehicle traveling on structure 110. Alternatively, imaging device 20 stores the time when a vehicle (e.g., a train) passes through structure 110, and one or more images of a video are captured at the time when a load is applied to structure 110.

Inspection device 30 is a computer, for example, including a processor (not shown) and a memory (not shown) storing software programs. The processor executes the software programs so that inspection device 30 fulfills a plurality of functions which will be described later. Alternatively, inspection device 30 may be a dedicated electronic circuit (not shown). In this case, the plurality of functions, which will be described later, may be implemented by separate electronic circuits or a single integrated electronic circuit.

Inspection device 30 is connected communicatively to imaging device 20. Based on videos captured by imaging device 20, the plurality of bolts 130 of joint 100 are inspected. In this embodiment, the term "inspection" means evaluation on the loosening and movement of the plurality of bolts 130. As specific example evaluation on the loosening, for example, loosening one(s) of the plurality of bolts 130 is/are identified and moved one(s) of the plurality of bolts 130 is/are identified.

Now, a configuration of inspection device 30 will be further described with reference to FIG. 2. FIG. 2 shows a functional configuration of inspection device 30 according to this embodiment.

As shown in FIG. 2, inspection device 30 includes obtainer 31, detector 32, identifier 33, outputter 34, and storage 35.

Obtainer 31 obtains videos of the plurality of bolts 130 captured continuously including the period in which the load applied to structure 110 changes. Obtainer 31 obtains, for example, a plurality of images including a first image and a second image of the plurality of bolts 130 captured at different times. The videos obtained by obtainer 31 include all the plurality of bolts 130 that fasten structure 110. Each video is captured, for example, by imaging device 20 in a single imaging operation. That is, the plurality of images constitutes a video captured in the single imaging operation. Note that the "imaging operation" is the operation performed by imaging device 20 for imaging from when imaging device 20 receives an instruction on starting the imaging to when imaging device 20 receives an instruction on stopping the imaging started as instructed. The imaging operation includes opening and closing of a shutter, for example.

How obtainer 31 obtains videos is not particularly limited. Obtainer 31 may obtain the videos from imaging device 20 via wireless communications or via a detachable memory (e.g., a universal serial bus (USB) memory).

Note that the data obtained by obtainer 31 is not limited to the videos. Obtainer 31 may obtain the first and second images of the plurality of bolts 130 captured at the times different from each other. At least one of the first and second images obtained by obtainer 31 is captured while a load is applied to structure 110. For example, at least one of the first and second images is captured when a vehicle passes through structure 110.

Detector 32 detects first and second displacements based on the first and second images. The first displacements are the respective displacements of the plurality of bolts 130, whereas the second displacement is a representative value of the respective displacements of the plurality of bolts 130. If the plurality of images are three or more images including the first and second images, detector 32 detects the first and second displacements at each of a plurality of times based on the plurality of images. If the plurality of images includes first to third images, detector 32 detects two first displacements and two second displacements, using one of the first to third images as a reference. The plurality of images may include a large number of images in one preferred embodiment in view of improving the accuracy in identifying a behavior different from others. The plurality of images may constitute a video including at least one of the period in which a load is applied to structure 110 or the periods, before and after the period, in which no load is applied. Note that detector 32 only needs to detect at least the first displacements.

While how detector 32 detects the rotations and movements of bolts 130 is not particularly limited, the detection may be made by a known method. For example, detector 32 analyzes the first and second images by a known image analyzing method to detect the angles and positions of the plurality of bolts 130 included in the first and second images. Detector 32 detects the rotation angles of the plurality of bolts 130 based on the angles of the plurality of bolts 130 included in the first and second images. In addition, detector 32 detects the movement distances of the plurality of bolts 130 based on the positions of the plurality of bolts 130 included in the first and second images.

Detector 32 may detect the appearances of the plurality of bolts 130 from the first and second images, for example, to detect the angles and positions of the plurality of bolts 130. The image analyzing method may be, for example, feature detection (e.g., edge detection) or any other method as long as being capable of detecting the shapes of bolts 130.

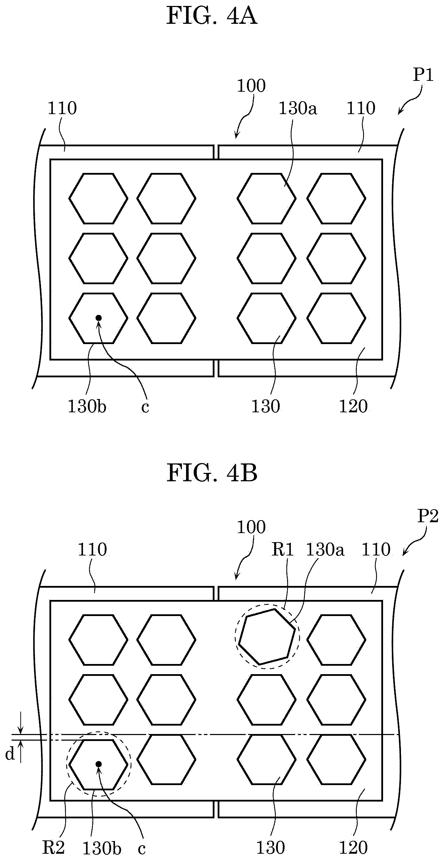

A "rotation of bolt 130" means, for example, a movement of bolt 130 about a rotation axis passing through the center (i.e., center c shown in FIG. 4A) of bolt 130 and parallel to the direction in which the threaded shank extends. On the other hand, a "movement of bolt 130" means, for example, a movement of center c of bolt 130 on the plane orthogonal to the rotation axis of the bolt.

Detector 32 detects the displacements using, as a reference, the angles and positions of the plurality of bolts 130 included an image captured at a predetermined time, for example. Detector 32 detects, as the displacements, the differences from the angles and positions of the plurality of bolts 130 included in an image captured at a predetermined time, for example.

Note that detector 32 may detect falling out of bolt 130. Detector 32 may detect the falling out of bolt 130, for example, based on reference information and target information. The reference information relates to at least one of the number and arrangement of the plurality of bolts 130 at joint 100 stored in storage 35. The target information includes at least one of the number of and arrangement of bolts 130 detected based on a video. Detector 32 may detect the falling out of bolts 130, for example, when the number or arrangement of bolts 130 included in the reference information is not identical with that in the target information.

Identifier 33 identifies, out of the plurality of bolts 130, bolt 130 that may be loosening. Identifier 33 identifies bolt 130 that may be loosening not based on the displacement according to the past and present images of single bolt 130 but based on the relative displacements of the plurality of bolts 130. In other words, identifier 33 identifies, out of the plurality of bolts 130, bolt 130 behaving differently from other bolts 130. In the following description, bolt 130 behaving differently from other bolts 130 will be referred to as a "target bolt" (i.e., an example of the "target fastening member"). The target bolt is bolt 130 that may be abnormal (e.g., loosening) and subjected to visual or hammering inspection by an inspector.

Identifier 33 identifies the target bolt using a statistical index, for example. Identifier 33 identifies the target bolt, for example, based on a representative value (an example of the "second displacement") of the plurality of displacements of bolts 130 and the displacements (an example of the "first displacements") of the plurality of bolts 130. Identifier 33 may identify the target bolt based on the difference between the representative value and the respective displacements of the plurality of bolts 130, for example. Identifier 33 may identify bolt 130 whose first displacement is different from the second displacement by a predetermined value or more, as the target bolt out of the plurality of bolts 130. If there are first and second displacements at each of a plurality of times, identifier 33 may identify the target bolt based on the first and second displacements detected at each of the plurality of times.

The predetermined value may be the constant multiple (e.g., one or two times) of the standard deviation, for example. For example, identifier 33 may identify, as the target bolt, bolt 130 whose displacement is different from the representative value by the constant multiple of the standard deviation or more. The representative value may be the mean, median, or robust estimate of the plurality of displacements of bolts 130. The robust estimate includes a random sample consensus (RANSAC) estimate or an M-estimate. The RANSAC estimate is the mean or median calculated from ones of the plurality of first displacements after excluding the influence of the outliers by the RANSAC. Detector 32 calculates the mean or median of the first displacements to detect the representative value. An example will be described below where the representative value is the mean.

Identifier 33 may identify the target bolt with respect to each of the rotation angles and the movement distances. Specifically, identifier 33 identifies the target bolt with respect to the rotation based on the mean (i.e., an example of the "second displacement") of the rotation angles of the plurality of bolts 130 and the rotation angles (i.e., an example of the "first displacements") of the plurality of bolts 130, for example. In addition, identifier 33 identifies the target bolt with respect to the movement based on the mean (i.e., an example of the "second displacement") of the movement distances of the plurality of bolts 130 and the movement distances (i.e., an example the "first displacements") of the plurality of bolts 130, for example. In other words, identifier 33 identifies which of the rotation angle and movement distance of the target bolt is different from those of other bolts 130.

Identifier 33 outputs, to outputter 34, information identifying the target bolt and information indicating which of the rotation and movement contributes to the identification of the target bolt, for example. Note that the mean is the value obtained by averaging the plurality of displacements of bolts 130 captured at the same time. In this case, the first displacements include the rotation angles and movement distances of the plurality of bolts 130. The second displacement includes representative values of the rotation angles and movement distances of the plurality of bolts 130.

Bolt 130 behaving differently from other bolts 130 in the rotation but not in the movement is the target bolt with respect to the rotation. For example, this bolt 130 may be loosening. On the other hand, bolt 130 behaving differently from other bolts 130 not in the rotation but in the movement is the target bolt with respect to the movement. For example, this bolt 130 is not loosening but there may be a gap between this bolt 130 and structure 110 or between this bolt 130 and splice plate 120. That is, bolt 130 is not loosening but the receiver of bolt 130 may be abnormal. Bolt 130 behaving differently from other bolts 130 in the rotation and movement may be loosening and the receiver of this bolt 130 may be abnormal, for example.

In this manner, identifier 33 detects the rotations and movements of bolts 130 independently to classify the mode of abnormality (e.g., loosening of a bolt or abnormality of a receiver) of a target bolt.

Identifier 33 may identify, as a target bolt, one or more bolts 130 whose displacement(s) is/are largely different from the mean, median, or robust estimate (e.g., the RANSAC estimate), for example. For example, identifier 33 may identify, as the target bolt, bolt 130 whose displacement is most different from the mean, or may identify, as the target bolts, a predetermined number of (e.g., three) bolts 130 whose displacements are most different from the mean.

Identifier 33 may not necessarily identify the target bolt based on the difference from the mean, median, or robust estimate (e.g., RANSAC estimate), for example. Identifier 33 may identify the target bolt based on the ratio of the respective displacements of the plurality of bolts 130 and the mean, median, or robust estimate, for example. Identifier 33 may identify, as the target bolt, bolt 130 with the highest or lowest ratio. Alternatively, identifier 33 may identify the target bolt based on the difference in the rotation direction or movement direction of bolt 130. Identifier 33 may identify, for example, bolt 130 whose rotation direction is different from those of other bolts 130, as the target bolt out of the plurality of bolts 130. Alternatively, identifier 33 may identify the target bolt based on the comparison of time-series data on the first and second displacements obtained from three or more images. Alternatively, identifier 33 may identify the target bolt out of the plurality of bolts 130 by a combination of the identification methods described above.

Identifier 33 identifies the target bolt out of the plurality of bolts 130 placed under the same circumstances such as being arranged on splice plate 120. Accordingly, identifier 33 performs the identification at a higher accuracy as compared to the case where the target bolt is identified out of the plurality of bolts 130 not placed under the same circumstances.

Outputter 34 outputs the results of the identification by identifier 33. Outputter 34 outputs the results to clarify bolt 130 with a predetermined displacement out of the plurality of bolts 130. Outputter 34 may output the results to an external device (e.g., display device) for inspection device 30 or may output the result to a display, if inspection device 30 includes the display.

Outputter 34 may output the results to clarify bolt 130 with the predetermined displacement using the first or second image, for example. Outputter 34 may output, as a result, an image obtained by superimposing the display of the degrees of abnormality of the plurality of bolts 130 on the first or second image. Outputter 34 may display the degrees of abnormality of the plurality of bolts 130 in different colors, for example. Outputter 34 may display the degrees of abnormality of the plurality of bolts 130 using bounding boxes, around bolts 130, in different colors or bolts 130 in transparent colors, for example. Note that the results of the outputs by outputter 34 are not limited thereto and may be any result that clarifies bolt 130 with a predetermined displacement.

Storage 35 is a storage device that stores control programs to be executed by processors (e.g., detector 32 and identifier 33) included in inspection device 30. Alternatively or additionally, storage 35 may store videos obtained via obtainer 31. Storage 35 may be a semiconductor memory, for example.

As described above, inspection device 30 identifies, as the target bolt, a bolt behaving differently from other bolts out of the plurality of bolts 130 based on the first and second displacements, that is, based on the time-series data on the behaviors (in rotations and movements) of the plurality of bolts 130. In short, inspection device 30 identifies the target bolt from a video (or the first and second images) being captured at present, without using past data (e.g., an image captured before the present imaging) on the rotations and movements of bolts 130.

### 2. Operation of Inspection Device

Now, an operation of inspection device 30 will be described with reference to FIGS. 3 to 6. FIG. 3 is a flowchart showing the operation of inspection device 30 according to this embodiment. Note that the operation of inspection system 10 includes an imaging step of capturing the plurality of bolts 130 by imaging device 20 before step S10 shown in FIG. 3. In the imaging step, for example, a video is captured which includes the period in which a load is applied to structure 110.

As shown in FIG. 3, inspection device 30 obtains a video of plurality of bolts 130 from imaging device 20 via obtainer 31 (S10). Inspection device 30 may obtain real-time images from imaging device 20 to obtain the video, and may obtain a video captured for a predetermined time period. Specifically, in step S10, inspection device 30 obtains a plurality of images including the first and second images of the plurality of bolts 130 captured at different times. Note that inspection device 30 may obtain the plurality of images from imaging device 20 after the end of the imaging by imaging device 20.

Next, detector 32 detects the displacements of plurality of bolts 130 from the video (S20). The detection of the displacements by detector 32 will be described with reference to FIGS. 4A and 4B. FIG. 4A shows image P1 captured by imaging device 20 while no load is applied to structure 110. Image P1 shown in FIG. 4A is an example of the "first image", for example. FIG. 4B shows image P2 captured by imaging device 20 while a load is applied to structure 110. Image P2 shown in FIG. 4B is an example of the "second image", for example. That is, FIGS. 4A and 4B show the first and second images, respectively, of the plurality of images constituting a video to be obtained by obtainer 31. Example detection of the displacements by detector 32 will be described using the first and second images. Note that four bolts 130 aligned in a row including bolt 130b in image P1 are located in the same position in the vertical direction (i.e., the up-down direction on the paper).

Detector 32 detects the respective angular and positional displacements of the plurality of bolts 130 in image P2 using, as a reference, the angles (i.e., tilts) and positions of the plurality of bolts 130 in image P1 shown in FIG. 4A. That is, detector 32 detects the rotation angles and movement distances of the plurality of bolts 130 based on images P1 and P2.

In the example shown in FIG. 4B, bolt 130a located in region R1 has rotated from the position of bolt 130a corresponding to region R1 in FIG. 4A by rotation angle θ°. On the other hand, bolt 130b located in region R2 has moved from the position of bolt 130b corresponding to region R2 in FIG. 4A by movement distance d. Detector 32 detects rotation angle θ as the displacement of bolt 130a, and movement distance d as the displacement of bolt 130b. Detector 32 detects the displacements in an image captured at a different time from image P2 using, as a reference, the angles and positions of the plurality of bolts 130 shown in image P1. That is, detector 32 detects the rotation angles and movement distances of the plurality of bolts 130 at each of a plurality of times based on images P1 and P2. Note that movement distance d is indicated by the number of pixels in an image, for example. In addition, movement distance d corresponds to the distance moved by center c of bolt 130b between FIGS. 4A and 4B.

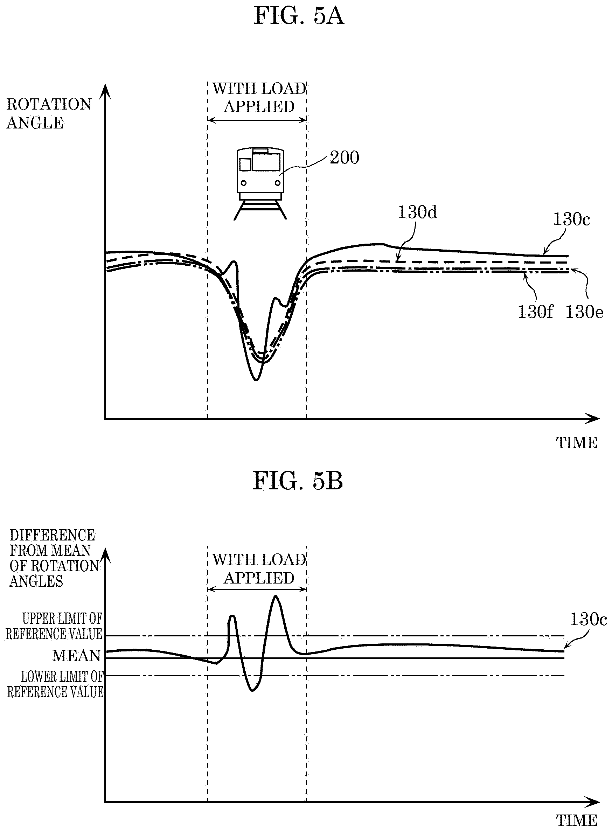

Now, time-series data on the displacements of bolts 130 will be described with reference to FIG. 5A. FIG. 5A shows the time-series data on the displacements of bolts 130 according to this embodiment. FIG. 5A shows the time-series data on the rotation angles (i.e., an example of the "displacements") of four bolts 130c to 130f in a single video. In FIG. 5A, the period "WITH LOAD APPLIED" corresponds to the time when a load is applied to structure 110, for example, while train 200 passes through structure 110. The bolts will be hereinafter simply referred to as "bolts 130" without distinguishing bolts 130c to 130f from each other.

As shown in FIG. 5A, the displacements of the rotation angles are significantly different when a load is applied. Bolt 130c is behaving differently from other three bolts 130d to 130f in the period in which a load is applied. In this manner, if bolt 130c is loosening, the rotation angle is significantly different in the period in which a load is applied. That is, detector 32 detects the displacements using an image (e.g., image P2) captured at least when a load is applied. In view of easily identifying bolt 130 behaving differently from other bolts 130, a video may be captured including the period in which a load is applied. Note that detector 32 may detect the displacements of bolts 130 without including a video (or images) captured in the period in which a load is applied. The displacements of bolts 130 may be detected from the videos (or images) captured before and after train 200 passes through structure 110, for example.

Detector 32 detects the respective displacements of the plurality of bolts 130 using, as a reference, an image of the video shown in FIG. 5A at a certain time. Then, detector 32 calculates the respective displacements of bolts 130c to 130f at times and the mean of the displacements to detect the first and second displacements.

Referring back to FIG. 3, identifier 33 identifies bolt 130 behaving differently from the others, out of the plurality of bolts 130 based on the displacements (S30). For example, assume that the displacement of one bolt 130 of the plurality of bolts 130 is different from the mean, as a representative value, of the displacements of the plurality of bolts 130 by a predetermined value or more. In this case, identifier 33 identifies this bolt 130 as bolt 130 behaving differently from other bolts 130. Identifier 33 performs the processing described above for each of the plurality of bolts 130.

Now, identification of bolt 130 behaving differently from other bolts 130 out of the plurality of bolts 130 by identifier 33 will be described with reference to FIG. 5B. FIG. 5B shows a difference of the displacement of bolt 130 according to this embodiment from the mean. Specifically, FIG. 5B shows the time-series data on the difference of the displacement of the rotation angle of bolt 130c out of bolts 130c to 130f from the mean. Note that the mean of the displacements of the rotation angles shown in FIG. 5B is the average of the displacements of the rotation angles of bolts 130c to 130f at each time. In FIG. 5B, the upper limit of the reference value is obtained by adding the constant multiple of the standard deviation to the mean, whereas the lower limit of the reference value is obtained by subtracting the constant multiple of the standard deviation from the mean. The standard deviation is calculated at each time from the rotation angles of bolts 130c to 130f as of the time. For convenience, the mean and the upper and lower limits of the reference value are indicated by straight lines.

It is found from FIG. 5B that the rotation angle of bolt 130c is largely different from the mean in the period in which a load is applied. In the period in which a load is applied, bolt 130c rotates largely as compared to other bolts 130d to 130f. That is, bolt 130c behaving differently from other bolts 130d to 130f in the period in which a load is applied.

Assume that the difference from the mean of the displacements exceeds at least one of the upper and lower limits of the reference value, that is, does not fall within the upper and lower limits of the reference value. In this case, identifier 33 identifies this bolt 130 (i.e., bolt 130c in FIG. 5B) as the target bolt behaving differently from other bolts 130 (i.e., bolts 130d to 130f shown in FIG. 5A).

Identifier 33 outputs, to outputter 34, a result of the identification in step S30, that is, the information on bolt 130c. Identifier 33 may output, to outputter 34, an image of bolt 130c identified in step S30 with a predetermined mark, out of the plurality of bolts 130 in an image captured by imaging device 20, for example. Alternatively, identifier 33 may output, to outputter 34, the information indicating the position of bolt 130c identified in step S30 relative to the plurality of bolts 130. Alternatively, identifier 33 may output, to outputter 34, the information indicating that there is bolt 130c behaving differently from the others. Note that identifier 33 may store the information output to outputter 34 in storage 35.

Then, outputter 34 outputs the result of the identification by identifier 33 in step S30 (S40). If inspection device 30 includes a display, outputter 34 may output the result of the identification to the display. Alternatively, inspection device 30 may output the result of the identification to an external display for inspection device 30.

While an example has been described above where detector 32 detects both the first and second displacements, the configuration is not limited thereto. Detector 32 may detect at least the first displacements. Then, identifier 33 may identify the target bolt based on the first displacements. Identifier 33 may identify, as the target bolt, bolt 130 that has a different first displacement from other bolts 130. If the first displacements are the rotation angles, identifier 33 may identify, for example, bolt 130 with the largest rotation angle, as the target bolt out of the first displacements.

As described above, inspection device 30 inspects the plurality of bolts 130 (i.e., an example of the "fastening members") that fasten structure 110. Inspection device 30 includes obtainer 31, detector 32, and identifier 33. Obtainer 31 obtains image P1 (i.e., an example of the "first image") and image P2 (i.e., an example of the "second image") of the plurality of bolts 130 captured at different times. Detector 32 detects the first displacements that are the respective displacements of the plurality of bolts based on images P1 and P2. Identifier 33 identifies, out of the plurality of bolts 130, bolts 130a and 130b (see, FIGS. 4A and 4B) behaving differently from other bolts 130 based on the first displacements.

With this configuration, inspection device 30 identifies, out of the plurality of bolts 130, bolt 130 that may be abnormal (e.g., loosening bolt 130) based on the relative behavior. That is, inspection device 30 identifies bolt 130 that may be abnormal without any data as a reference obtained in advance. Accordingly, inspection device 30 identifies bolt 130 that may be abnormal without clear determination criteria, for example, a bolt rotated at a predetermined angle or more may be abnormal. As a result, inspection device 30 according to the aspect of the present disclosure simply inspects the plurality of bolts 130 that fasten structure 110.

Inspection device 30 described above identifies a target bolt that has a problem such as loosening, without any reference for determining the absolute value of the respective displacements of the plurality of bolts 130. That is, inspection device 30 identifies a target bolt that has a problem such as loosening, without any determination criteria represented by the absolute value (e.g., the determination criteria such as rotation of 5° or more or movement of 5 mm or more).

While an example has been described where detector 32 uses, as a reference, image P1, that is, an image (e.g., a first image) captured by imaging device 20 while no load is applied to structure 110, the configuration is not limited thereto. For example, detector 32 may detect the displacements using, as a reference, image P2, that is, an image (e.g., a second image) captured by imaging device 20 while a load is applied to structure 110. Detector 32 detects the displacements using, as a reference, one of the plurality of images constituting a video captured by imaging device 20, for example.

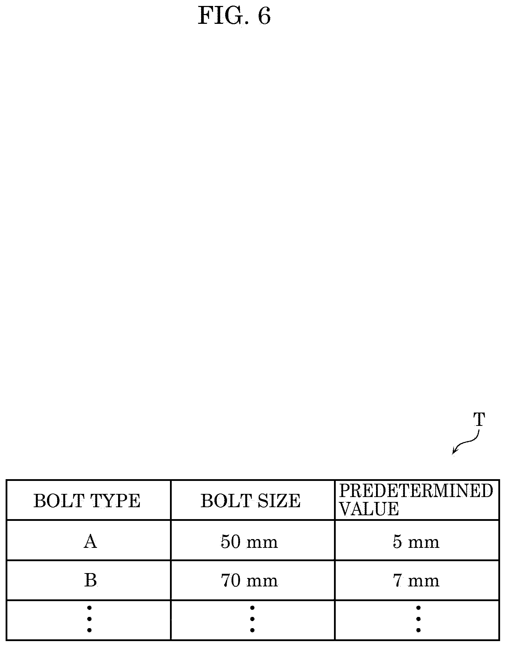

An example has been described where identifier 33 identifies bolt 130 behaving differently from other bolts 130 based on a predetermined value determined by the standard deviation. The predetermined value is determined not necessarily by the standard deviation. The predetermined value may be determined in accordance with the shape of bolts 130. The predetermined value may be determined based on the size of bolts 130, for example. The size of bolts 130 used for the determination on the predetermined values may be the size of the parts of the threaded shanks and heads, at one ends of the shanks, of bolts 130, for example, imaged by imaging device 20. If imaging device 20 images the heads of bolts 130 (see, e.g., FIG. 4A), the predetermined value may be determined in accordance with the size of the heads of bolts 130. FIG. 6 is table T including the sizes of bolts 130 stored in storage 35 according to this embodiment.

As shown in FIG. 6, storage 35 stores the types of bolts 130, the sizes of bolts 130, and the predetermined values in association with each other. If bolts 130 are hex bolts, the types (e.g., A, B, ... shown in FIG. 6) of bolts 130 may be represented by the names (e.g., M33) of bolts 130. If bolts 130 are hex bolts, the sizes (e.g., 50 mm, 70 mm, ... in FIG. 6) of bolts 130 are width across flats, for example. The predetermined values (e.g., 5 mm, 7 mm, ... in FIG. 6) are set in advance based on the sizes of bolts 130, for example. Note that table T may include at least one of the types or sizes of the bolts.

Detector 32 detects, as the displacements of bolts 130, movement distances d moved by bolts 130, that is, the distances (e.g., actual distances) moved in the space in which bolts 130 are actually placed based on the number of pixels constituting a video of bolts 130 captured by imaging device 20 and table T stored in storage 35. Detector 32 calculates the mean of actual distances detected for the plurality of bolts 130.

Identifier 33 may read, from storage 35, the predetermined values according to the type of bolts 130 captured by imaging device 20 and set the upper and lower limits of the reference value based on the read predetermined value and the mean. The upper limit of the reference value is obtained by adding the read predetermined value to the mean, for example. On the other hand, the lower limit of the reference value is obtained by subtracting the read predetermined value from the mean, for example.

Assume that bolt 130 behaving differently from other bolts 130 in the movements of bolts 130 is identified. In this case, identifier 33 identifies, as the target bolt, bolt 130 behaving differently from other bolts 130 in the upward (e.g., vertically upward) movements of bolts 130 based on the upper limit of the reference value. In addition, identifier 33 identifies, as the target bolt, bolt 130 behaving differently from other bolts 130 in the downward (e.g., vertically downward) movements of bolts 130 based on the lower limit of the reference value. Note that inspection device 30 may obtain the type of bolts 130 from an inspector, for example. Alternatively, inspection device 30 may inspect and analyze the images of bolts 130 to obtain the type of bolts 130 from the information provided for bolts 130 and identifying bolts 130 (e.g., ridges and grooves of the heads and indicating the type of bolts 130).

As described above, inspection device 30 detects the actual movement distances of bolts 130 from the information on the actual size of bolts 130. Identifier 33 identifies bolt 130 behaving differently from the others using the upper and lower limits of the reference value set in accordance with the size of bolts 130. Accordingly, identifier 33 identifies the target bolt at a higher accuracy. Even if the actual size is unknown from the video obtained from imaging device 20, inspection device 30 identifies bolt 130 behaving differently from the others using the actual size by the method described above.

Note that identifier 33 only needs to identify bolt 130 behaving differently from the others based on the size of bolts 130 and may obtain the predetermined value by predetermined calculation using the size of bolts 130.

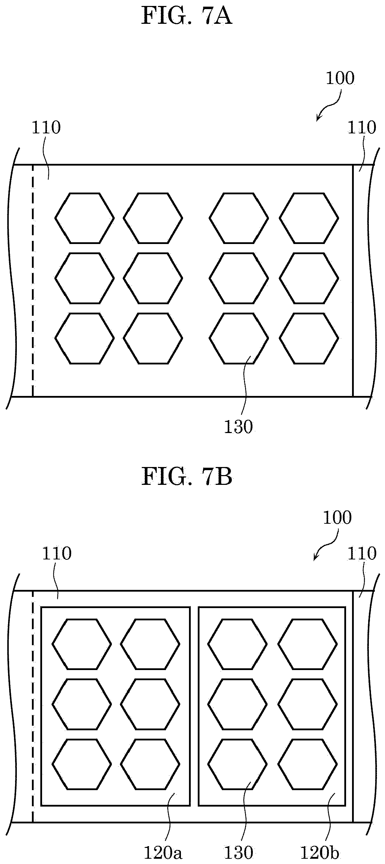

While an example has been described above where the plurality of bolts 130 fasten structure 110 with single splice plate 120 interposed therebetween, the configuration is not limited thereto. Fastening of structure 110 by bolts 130 will be described with reference to FIGS. 7A and 7B. FIG. 7A shows another example joint 100 imaged by imaging device 20. FIGS. 7B shows further another example joint 100 imaged by imaging device 20.

As shown in FIG. 7A, structure 110 may be fastened by a plurality of bolts 130 (i.e., example fastening members) with no splice plate 120 interposed therebetween. Imaging device 20 images the plurality of bolts 130 that fasten structure 110, for example, with no splice plate 120 interposed therebetween. That is, imaging device 20 images the plurality of bolts 130 placed under the same circumstances.

Inspection device 30 obtains, from imaging device 20, a plurality of images of joint 100 without any splice plate 120. Inspection device 30 identifies, as the target bolt, bolt 130 behaving differently from other bolts 130 out of the plurality of bolts 130 that fasten structure 110 with no splice plate 120 interposed therebetween.

For example, as shown in FIG. 7B, at joint 100, structure 110 may be fastened by a plurality of bolts 130 with a plurality of splice plates (e.g., first splice plate 120a and second splice plate 120b) interposed therebetween. Imaging device 20 images the plurality of bolts 130 that fasten structure 110, for example with the plurality of splice plates interposed therebetween. That is, imaging device 20 images the plurality of bolts 130 placed under the same circumstances.

Inspection device 30 obtains, from imaging device 20, the plurality of images of joint 100 including the plurality of splice plate. Inspection device 30 identifies target bolt 130 behaving differently from other bolts 130, as the target bolt out of the plurality of bolts 130 that fasten structure 110 with the plurality of splice plate interposed therebetween.

In this case, inspection device 30 may identify, for each of the plurality of splice plates, bolt 130 behaving differently from other bolts 130, as the target bolt out of the plurality of bolts 130 arranged on the splice plate. Alternatively, inspection device 30 may identify, as the target bolt, bolt 130 behaving differently from other bolts 130 out of all the plurality of bolts 130 provided for the plurality of splice plates. Note that first and second splice plates 120a and 120b may have the same or different shapes.

### Variation of Embodiment

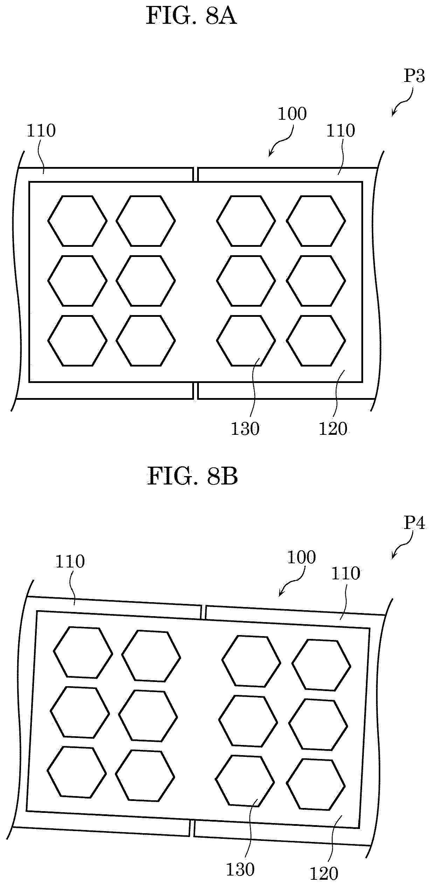

Now, inspection device 30 or other elements according to this variation will be described with reference to FIGS. 8A and 8B. Note that inspection device 30 has the same or similar configuration to that in the embodiment and the description thereof will thus be omitted. In this variation, an example will be described where entire structure 110, that is, entire joint 100 moves as shown in FIGS. 8A and 8B. FIG. 8A shows image P3 captured by imaging device 20 before the movement of entire structure 110. FIG. 8B shows image P4 captured by imaging device 20 at the movement of entire structure 110. Image P3 is an example of the "first image", for example, whereas image P4 is an example of the "second image", for example. FIG. 8B shows entire joint 100 moved (or rotated) from the state shown in FIG. 8A.

Note that the movement of entire joint 100 may be caused by deflection of structure 110 or vibration of imaging device 20, for example, when a load is applied to structure 110 (e.g., a load applied when train 200 passes through structure 110).

Obtainer 31 obtains, from imaging device 20, images including splice plate 120. That is, each of the plurality of images includes splice plate 120.

Detector 32 detects the respective angular and positional displacements of the plurality of bolts 130 in image P4 shown in FIG. 8B using, as a reference, the angles (i.e., tilts) and positions of the plurality of bolts 130 in image P3 shown in FIG. 8A. At this time, the displacements detected from images P3 and P4 include the displacements caused by the movement of entire joint 100. To address the problem, detector 32 reduces the influence of the motion of entire joint 100 on the detection of the displacements of bolts 130. Detector 32 corrects the motion of entire joint 100 so that the motion of entire joint 100 does not affect the detection of the displacements.

Detector 32 detects the dominant motion (e.g., the rotation and the movement) of entire joint 100 from splice plate 120 in images P3 and P4, for example, and calculates the dominant motion with the respective displacements of the plurality of bolts 130 to detect the displacements of bolts 130 themselves. The calculation here is the processing of removing the displacement of entire joint 100 from the respective displacements of the plurality of bolts 130, for example.

How detector 32 detects the motion of entire joint 100 is not particularly limited. A technique used for blur correction (e.g., camera shake correction) is applicable. Detector 32 may calculate the motion vector from the difference in splice plate 120 between images P3 and image P4, for example, and correct the respective displacements of the plurality of bolts 130 in accordance with the calculated motion vector.

The motion vector may be obtained on a window-by-window basis after dividing an image of a single flame into a plurality of windows (smaller areas than the image of the single flame), for example. Each of the plurality of windows is a region including at least a part of splice plate 120. That is, a plurality of motion vectors may be set for a single image. With this configuration, detector 32 properly corrects the displacements of the plurality of bolts 130 caused by the movement of entire joint 100, even if the displacements are different from each other.

The motion vector may be one calculated form the respective motion vectors obtained for the plurality of windows. That is, one motion vector may be set for a single image. With this configuration, detector 32 corrects the dominant motion of entire joint 100.

As described above, assume that the plurality of bolts 130 (i.e., an example of the "fastening members") and entire splice plate 120 (e.g., entire joint 100) move. In this case, detector 32 corrects the respective displacements of the plurality of bolts 130 in accordance with the movement of splice plate 120. That is, detector 32 corrects the first and second displacements.

With this configuration, even if entire joint 100 moves, identifier 33 further identifies bolt 130 behaving differently from other bolts 130 at the joint.

Note that the motion of entire joint 100 may be larger than the motions of bolts 130 themselves. In view of reducing a decrease in the S/N ratio, three or more images may be used in correction of the motion of entire joint 100. That is, the target bolt can be identified accurately using the time-series data on the displacements based on the three or more images including a corrected motion of entire joint 100, even if the motion of entire joint 100 is corrected.

### Other Embodiments

The inspection device and inspection method according to one or more aspects of the present disclosure have been described above based on the embodiment and the variation (hereinafter referred to simply as the "embodiment, for example"), the present disclosure is not limited to this embodiment, for example. One or more aspects of the present disclosure may include other embodiments, such as those obtained by variously modifying the embodiment as conceived by those skilled in the art or those achieved by freely combining the constituent elements in the embodiment, for example, without departing from the scope and spirit of the present disclosure.

For example, the inspection device described above in the embodiment, for example, includes no imaging device but may include an imaging device. In this case, the imaging device functions as an imager as a part of the inspection device. In addition, the plurality of functional configurations (e.g., the obtainer, the detector, the identifier, and the outputter) included in the inspection device may be achieved by distributed computing or cloud computing.

An example has been described above in the embodiment, for example, where the difference (hereinafter referred to as a "first predetermined value") between the upper limit of the reference value and the mean is equal to the difference (hereinafter referred to as a "second predetermined value") and the lower limit of the reference value and the mean. However, the first and second predetermined values may be different from each other.

An example has been described above in the variation where both the first and second displacements are corrected, if the plurality of bolts and the entire splice plate (e.g., the entire joint) move. However, at least the first displacements may be corrected. The second displacement may be calculated by the corrected first displacements.

Some or all of the constituent elements of the inspection device described above in the embodiment, for example, may be included in a single system large scale integration (LSI). For example, the inspection device may be a system LSI including an obtainer, a detector, an identifier, and an outputter.

The system LSI is a super multi-function LSI manufactured by integrating a plurality of constituent parts onto a single chip, and specifically, a computer system including a microprocessor, a read-only memory (ROM), and a random-access memory (RAM), for example. The ROM stores computer programs. The microprocessor operates in accordance with the computer programs so that the system LSI fulfils its functions.

While the system LSI is named here, the integrated circuit may be referred to as an IC, an LSI circuit, a super LSI circuit, or an ultra LSI circuit depending on the degree of the integration. The technique of the circuit integration is not limited to the LSI but may be achieved by a dedicated circuit or a general-purpose processor. A field programmable gate array (FPGA) programmed after the manufacture of an LSI circuit, or a reconfigurable processor capable of reconfiguring the connections or settings of circuit cells inside an LSI may be employed.

Appearing as an alternative circuit integration technology to the LSI, it is obvious that another technology that progresses or deprives from the semiconductor technology may be used for integration of functional blocks. Application of biotechnology may be considered.

One aspect of the present disclosure is directed not only to such an inspection device and may also be directed to an inspection method including, as steps, the characteristic components included in the inspection device. Another aspect to the present disclosure may be directed to a computer program that causes a computer to execute the characteristic steps included in the inspection method. Further another aspect of the present disclosure may be directed to a non-transitory computer-readable recording medium storing such computer programs.

In the embodiment, for example, the constituent elements may be achieved by dedicated hardware or by executing software programs suitable for the constituent elements. The constituent elements may be achieved by a program executor, such as a CPU or a processor, reading and executing software programs stored in a storage medium such as a hard disk or a semiconductor memory.

### INDUSTRIAL APPLICABILITY

The present disclosure is widely applicable as inspection devices that inspect joints of structures.

### REFERENCE MARKS IN THE DRAWINGS

- 10: inspection system
- 20: imaging device
- 30: inspection device
- 31: obtainer
- 32: detector
- 33: identifier
- 34: outputter
- 35: storage
- 100: joint
- 110: structure
- 120: splice plate
- 120a: first splice plate
- 120b: second splice plate
- 130, 130a to 130f: bolt (fastening member)
- 200: train
- θ: rotation angle
- c: center
- d: movement distance
- P1, P3: image (first image)
- P2, P4: image (second image)
- R1, R2: region

## Claims

1. An inspection device for inspecting a plurality of fastening members that fasten a structure, the inspection device comprising:
an obtainer that obtains a plurality of images including a first image and a second image of the plurality of fastening members captured at times different from each other;
a detector that detects first displacements that are respective displacements of the plurality of fastening members based on the first image and the second image; and
an identifier that identifies, out of the plurality of fastening members based on the first displacements, a target fastening member behaving differently from other fastening members.

2. The inspection device according to claim 1, wherein
at least one of the first image and the second image is captured while a load is applied to the structure.

3. The inspection device according to claim 1 or 2, wherein
the detector further detects a second displacement that is a representative value of the respective displacements of the plurality of fastening members, and
the identifier further identifies the target fastening member based on the second displacement.

4. The inspection device according to claim 3, wherein
the plurality of images include three or more images including the first image and the second image,
the detector detects the first displacements and the second displacement at each of a plurality of times based on the plurality of images, and
the identifier identifies the target fastening member based on the first displacements and the second displacement detected at the plurality of times.

5. The inspection device according to claim 3 or 4, wherein
the plurality of fastening members fasten the structure with a splice plate interposed therebetween,
each of the plurality of images further includes the splice plate, and
at displacement of the plurality of fastening members and the splice plate as a whole, the detector corrects the first displacements in accordance with the displacement of the splice plate.

6. The inspection device according to any one of claims 3 to 5, wherein
the identifier identifies, as the target fastening member out of the plurality of fastening members, a fastening member having a first displacement different from the second displacement by a predetermined value or more.

7. The inspection device according to claim 6, wherein
the second displacement is a mean or a median of the first displacements of the plurality of fastening members, and
the predetermined value is determined based on a standard deviation of the first displacements of the plurality of fastening members.

8. The inspection device according to claim 6, wherein
the second displacement is a mean or a median of the first displacements of the plurality of fastening members, and
the predetermined value is determined based on a size of the plurality of fastening members.

9. The inspection device according to claim 7 or 8, wherein
the mean or the median is calculated by robust estimation.

10. The inspection device according to any one of claims 3 to 9, wherein
the first displacements include one of rotation angles or movement distances of the plurality of fastening members, and
the second displacement includes a representative value of the one of the rotation angles or the movement distances of the plurality of fastening members.

11. The inspection device according to any one of claims 3 to 9, wherein
the first displacements include rotation angles and movement distances of the plurality of fastening members,
the second displacement includes representative values of the rotation angles and the movement distances of the plurality of fastening members, and
the identifier further identifies which of a rotation angle and a movement distance of the target fastening member is different from rotation angles or movement distances of other fastening members.

12. The inspection device according to any one of claims 1 to 11, wherein
the plurality of images constitute a video captured in a single imaging operation.

13. The inspection device according to any one of claims 1 to 12, further comprising:
an imager that captures the plurality of images.

14. An inspection method using an inspection device for inspecting a plurality of fastening members that fasten a structure, the inspection method comprising:
obtaining a plurality of images including a first image and a second image of the plurality of fastening members captured at times different from each other;
detecting first displacements that are respective displacements of the plurality of fastening members based on the first image and the second image; and
identifying, out of the plurality of fastening members based on the first displacements, a target fastening member behaving differently from other fastening members.
